Europäisches Patentamt

European Patent Office

Office européen des brevets

(11) Numéro de publication: **0 274 288 B1**

(12) **FASCICULE DE BREVET EUROPEEN**

(45) Date de publication de fascicule du brevet:
**29.01.92**

(51) Int. Cl.⁵: **G06K 7/06**

(21) Numéro de dépôt: **87402613.1**

(22) Date de dépôt: **19.11.87**

(54) **Ensemble de connexion pour cartes à mémoire électronique et dispositif de lecture/ecriture en faisant application.**

(30) Priorité: **21.11.86 FR 8616202**

(43) Date de publication de la demande:
**13.07.88 Bulletin 88/28**

(45) Mention de la délivrance du brevet:
**29.01.92 Bulletin 92/05**

(84) Etats contractants désignés:
**BE CH DE ES FR GB IT LI NL SE**

(56) Documents cités:
**EP-A- 0 139 540**
**EP-A- 0 139 593**
**DE-A- 3 442 397**
**DE-U- 8 529 580**

(73) Titulaire: **SCHLUMBERGER INDUSTRIES**
**50, avenue Jean Jaurès**
**F-92120 Montrouge(FR)**

(72) Inventeur: **Maillot, Jean Claude**
**4, Chemin du Mesnil Aubry**
**F-95440 Ecouen(FR)**

(74) Mandataire: **Hasenrader, Hubert et al**
**Cabinet BEAU DE LOMENIE 55, rue d'Amsterdam**
**F-75008 Paris(FR)**

## Description

La présente invention concerne un ensemble de connexion pour cartes à mémoire électronique et un dispositif de lecture/ecriture pour cartes à mémoire électronique incluant ledit ensemble de connexion.

Ces cartes à mémoire électronique sont maintenant bien connues. Une telle carte se compose essentiellement d'un corps de carte de forme générale rectangulaire dans lequel est implanté un module électronique. Le module électronique comprend un circuit intégré comportant au moins un circuit mémoire et des plages externes de contact électrique qui sont reliées aux bornes du circuit intégré. Pour exploiter une telle carte on introduit celle-ci dans une machine de traitement. La machine de traitement comprend des circuits de traitement pour exploiter les informations contenues dans la mémoire de la carte et pour modifier ces informations et un dispositif de lecture/écriture qui permet d'assurer une connexion électrique temporaire entre les plages de contact de la carte et les circuits de traitement de la machine. L'établissement de cette connexion sert à alimenter le circuit intégré de la carte, à transmettre les instructions d'écriture/lecture de la mémoire de la carte, à appliquer la tension d'écriture et un signal d'horloge etc....

Il va de soi que le dispositif de lecture/écriture doit satisfaire à un certain nombre de conditions pour assurer une connexion correcte de la carte au circuit de traitement. Il faut qu'il assure un bon positionnement de la carte par rapport aux connexions électriques du lecteur afin que la liaison électrique entre le circuit intégré de la carte et les circuits de traitement du dispositif de lecture/écriture soit correctement établie avant le transfert des signaux. Il faut également que la pression entre les plages de contact externes de la carte et les connexions du lecteur soit suffisante pour établir un bon contact ohmique.

En outre il existe un grand nombre de machines utilisant un dispositif de lecture/écriture. On peut citer des téléphones publics, des parcmètres pour contrôler le paiement de la taxe de stationnement, des terminaux points de vente pour permettre aux usagers d'effectuer des achats sans chèque ni argent liquide, des systèmes de contrôle d'accès à des locaux protégés ou à des réseaux informatiques, etc... Il est donc intéressant de disposer d'un dispositif de lecture/écriture facilement adaptable à ces différentes machines.

Enfin il existe deux normes pour définir la position des plages de contact électrique de la carte dans la face principale du corps de la carte. Il est donc intéressant de disposer d'un dispositif de lecture/écriture qui accepte les deux types de cartes et qui sache les reconnaître, ou qui puisse être facilement modifié pour être adapté à l'un ou l'autre des types de cartes.

Un but de l'invention est de fournir un dispositif de lecture/écriture de cartes à mémoire électronique qui soit d'un coût réduit et qui puisse être facilement adapté aux différents types de cartes et aux différents types de machines dans lesquelles ils peuvent être montés. Pour atteindre ce but l'ensemble de connexion selon l'invention comprend :

Un connecteur comportant un support présentant une première face et une deuxième face, et une pluralité de conducteurs électriques en forme de lames, solidaires dudit support par leur partie médiane, chaque lame présentant une extrémité incurvée pour entrer en contact avec une plage de ladite carte et faisant saillie hors de ladite première face et une deuxième extrémité faisant saillie hors de ladite deuxième face,

un circuit électronique comportant un support isolant présentant une première face mise au contact de ladite deuxième face du connecteur et une deuxième face munie de liaisons électriques et de composants électroniques ; et

des moyens pour positionner et fixer ledit connecteur sur ledit support isolant, et pour établir une connexion électrique entre lesdites liaisons électriques du circuit électronique et lesdites deuxièmes extrémités desdites lames conductrices.

D'autres caractéristiques et avantages de l'invention apparaîtront plus clairement à la lecture de la description qui suit d'un mode de réalisation de l'invention donné à titre d'exemple non limitatif. La description se réfère au dessin annexé sur lequel :

La figure 1 est une vue partielle d'une carte à mémoire électronique montrant les plages de contact électrique;

La figure 2 est une vue de dessous du connecteur du dispositif de lecture/écriture ;

La figure 3 est une vue en coupe verticale selon la ligne III-III de la figure 2 ;

La figure 4 est une vue du connecteur selon la flèche A de la figure 2 ;

La figure 5a est une vue simplifiée d'un circuit imprimé utilisable avec le connecteur des figures 2 à 4 ;

La figure 5b est une vue de dessus du support isolant du circuit électronique de la figure 5a ;

La figure 6 montre l'ensemble de connexion formé par le connecteur et le circuit imprimé ;

La figure 7 est une vue de face de la partie supérieure d,un corps de dispositif de lecture/écriture destiné à recevoir un ensemble de connexion tel que représenté sur les figures 2 à 5 ;

La figure 8 est une vue de dessous de la pièce représentée sur la figure 7 ;

La figure 9 est une vue en coupe de la pièce représentée sur la figure 8 selon la ligne B-B;

La figure 10 est une vue de face de la partie inférieure d'un corps de dispositif de lecture/écriture ; et

La figure 11 est une vue de dessus de la pièce représentée sur la figure 10.

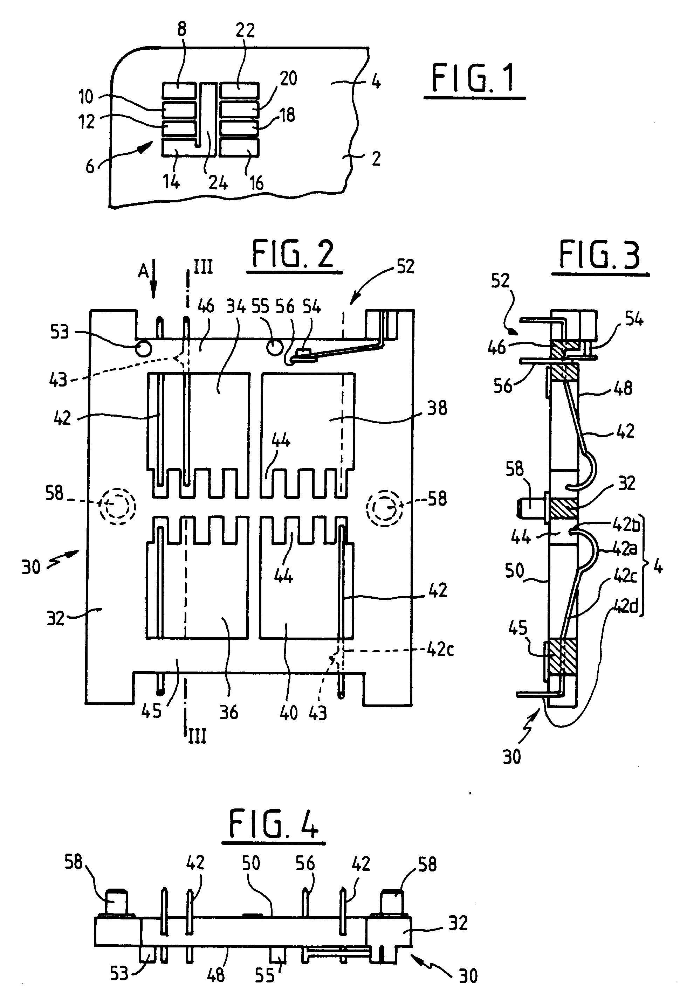

La figure 1 montre une partie d'une carte 2 qui comprend un corps de carte 4 et un ensemble 6 de plages de contact électrique. Dans le cas de la carte représentée, l'ensemble 6 comprend huit plages de contact 8 à 22 dont les cotes et les positions relatives sont définies par les normes ISO ou AFNOR. Il faut noter que le contact 14 qui correspond à la masse est prolongé par une métallisation centrale 24.

En se référant maintenant aux figures 2 à 4, on va décrire un mode préféré de réalisation d'un connecteur 30. Le connecteur 30 comporte un support 32 de forme générale rectangulaire qui comprend principalement deux séries de deux évidements respectivement référencés 34, 36 et 38, 40. Dans chaque évidement 34 à 40 font saillie les extrémités courbes 42a de connexions électriques 42 en forme de lames élastiques. Chaque évidement comporte 4 lames 42. Chaque paire d'évidements alignés comporte ainsi huit lames électriques 42 dont les extrémités courbes 42a reconstituent exactement la configuration des plages de contact électrique 8 à 22 de la carte. Le connecteur 30 peut donc quant à ses connexions électriques fonctionner avec deux types de cartes correspondant respectivement aux lames 42 de la première paire ou de la deuxième paire d'évidements. Comme on le voit mieux sur les figures 2 et 3, la partie terminale 42b de chaque lame 42, située au delà de la portion courbe 42a, pénètre librement dans une encoche 44 débouchant dans l'évidement. Chaque évidement 34 à 40 comporte 4 encoches 44 . Ainsi les lames 42 disposées dans les évidements 34 et 36 forment un premier connecteur correspondant à l'emplacement des plages de contact de la carte défini par la norme AFNOR, alors que les lames 42 disposées dans les évidements 38 et 40 forment un deuxième connecteur correspondant à l'emplacement des plages de contact de la carte défini par la norme ISO. Les lames 42 sont toutes disposées selon une même direction générale. Les lames 42 de deux évidements adjacents sont parallèles entre elles. Les lames de deux évidements appartenant à une même paire sont alignées deux à deux et disposées tête-bêche.

Comme on le voit mieux sur la figure 3, chaque lame 42 comporte de plus une partie médiane 42c qui traverse le support 32 dans une partie du support 32 qui forme un barreau 45 ou 46 selon l'évidement considéré.

L'autre extrémité 42d de chaque lame 42 est repliée à angle droit par rapport à la partie médiane 42c.

Le support 32 présente une face inférieure 48 visible sur la figure 2 et une face supérieure 50. Les portions incurvées 42a des lames 42 font saillie hors de la face inférieure 48 alors que les extrémités 42d de ces mêmes lames font saillie hors de la face supérieure 50 du support 32.

En dessous de la face inférieure 48 du support 32 on trouve également un micro-contact électrique 52 comportant un élément mobile 54 et un conducteur de sortie 56 faisant saillie hors de la face supérieure 50 du support.

De préférence le support 32 du connecteur 30 est obtenu par moulage d'un matériau plastique de préférence chargé pour tenir à une température de l'ordre de 230½C. Lors du moulage, les pièces métalliques formant les lames élastiques 42 et le conducteur électrique de sortie 56 du micro-contact sont mis en place dans le moule et sont partiellement surmoulées. La partie surmoulée de la lame comporte une déformation 43 pour interdire tout déplacement de la lame par rapport au support 32 On réalise ainsi le positionnement et la fixation de ces pièces sur le support 32 dans des conditions économiques particulièrement intéressantes.Le support 32 comprend également deux pions 58 de positionnement du connecteur par rapport au corps du dispositif de lecture/écriture.

On comprend dès à présent que le connecteur 30 selon l'invention doit être associé à au moins deux autres parties pour constituer un dispositif de lecture/écriture complet, d'une part un circuit électronique, de préférence sous forme d'un circuit imprimé qui vient prendre place sur la face supérieure 50 du support 32 du connecteur 30, ces deux pièces formant l'ensemble de connexion, et d'autre part au moins une pièce de guidage pour définir en dessous de la face 48 du support 32 un couloir de guidage et de positionnement de la carte.

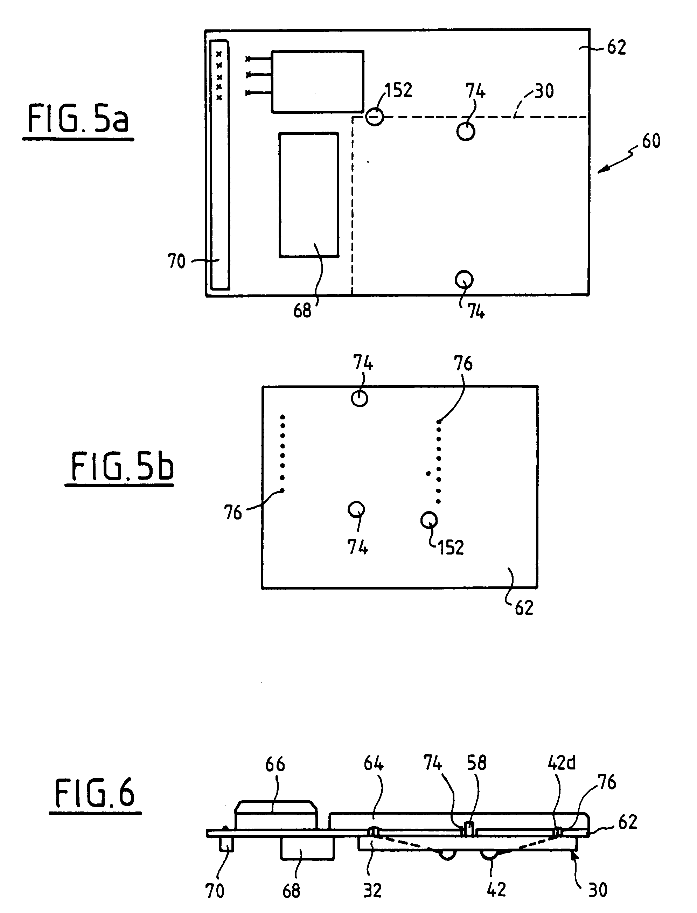

Les figures 5a, 5b et 6 donnent un exemple de circuit électronique 60 adaptable au connecteur 30 et un exemple de montage du circuit électronique 60 sur le connecteur. Le circuit 60 comprend un support isolant 62. Sur la face supérieure du support 62 sont montés des composants électroniques tels que 64 et 66, et sur sa face inférieure un composant 68, un bornier 70 et le connecteur 30. Le connecteur 30 est guidé par rapport au support isolant 62 par les pions qui traversent avec jeu des trous 74 ménagés dans le support isolant 62.

On comprend de plus que, une fois que le connecteur 30 a été positioné sur le support isolant 62, les extrémités 42d des lames conductrices 42 traversent des trous 76 ménagés dans le support isolant et font saillie hors du support isolant.

Il est donc très simple par soudage à la vague de réaliser la liaison électrique entre ces extrémités des lames élastiques et les pistes conductrices du circuit électronique. Cette opération réalise de plus la liaison mécanique entre le connecteur 30 et le circuit électronique 60. Il va de soi que la liaison pourrait être complétée par des vis ou tout autre moyen convenable.

Au lieu de prévoir des trous 76 dans le support isolant pour assurer la liaison électrique entre les extrémités 42d des lames conductrices 42 et les pistes conductrices du circuit électronique, il serait possible de prévoir des prolongements des pistes conductrices sur la face du support isolant 62 tournée vers le connecteur et de souder les extrémités 42d des lames conductrices sur ces prolongements de pistes conductrices. Pour réaliser la liaison électrique encore une autre solution consisterait à métalliser les trous 76 et à souder les extrémités 42d des lames conductrices aux métallisations des trous 76.

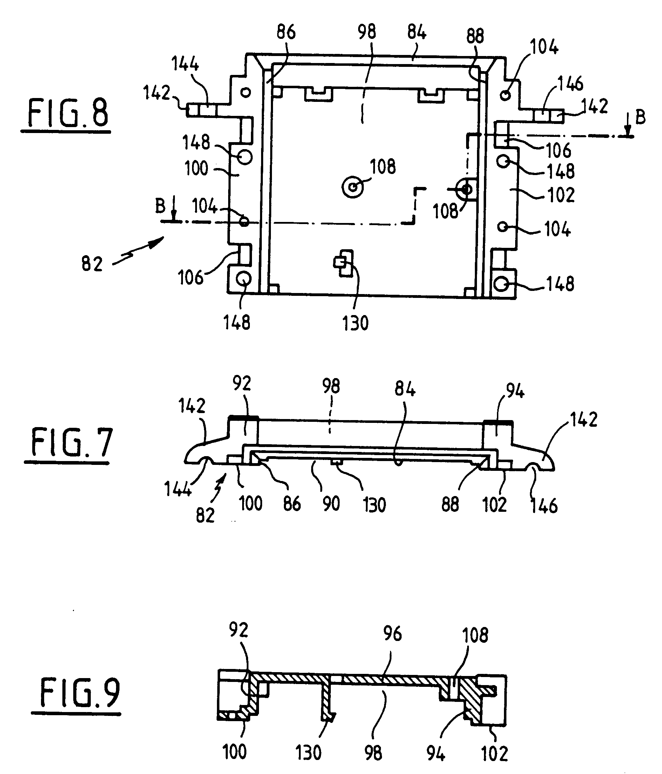

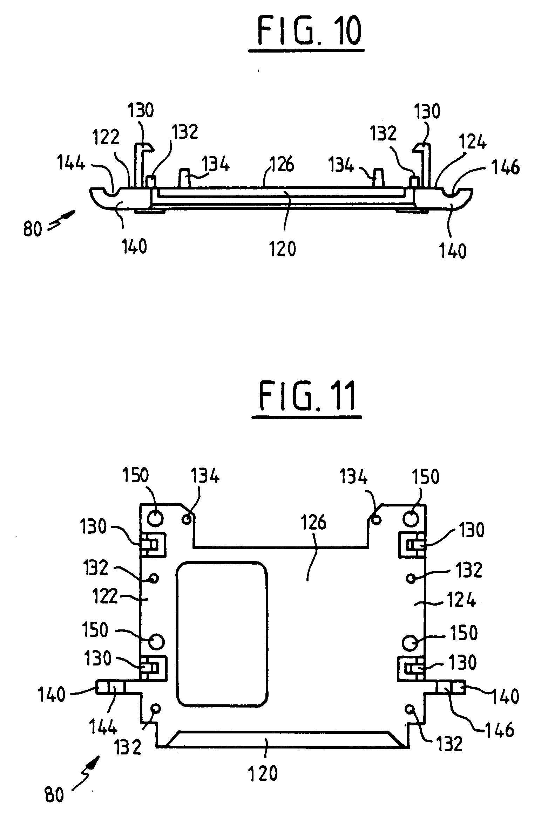

En se référant maintenant aux figures 7 à 11 on va décrire un mode de réalisation de dispositif de lecture/écriture selon l'invention incorporant l'ensemble de connexion déjà décrit en liaison avec les figures 3 à 6 .Le dispositif de lecture/écriture comprend un corps formé d'un plateau inférieur 80 représenté sur les figures 10 et 11 et d'un capot supérieur 82 représenté sur les figures 7 à 9. Le capot supérieur 82 comprend essentiellement des moyens de fixation de l'ensemble de connexion 30, 60, des moyens pour définir les parois latérales verticales du couloir de guidage de la carte et des moyens pour définir les parties latérales et supérieures de la fente d'introduction. Le plateau inférieur 80, qui est destiné à être fixé au capot supérieur 82, définit la table du couloir de guidage de la carte et la partie inférieure de la fente d'introduction.

Le capot supérieur 82 comprend une partie avant qui définit le bord supérieur 84 et les parois latérales 86 et 88 de la fente d'introduction 90. Le capot comprend deux bords 92 et 94 et une paroi supérieure 96 qui définissent dans la pièce 82 une cavité 98 dont la hauteur est bien supérieure à celle de la fente d'introduction 90. Les bords 92 et 94 définissent deux faces planes 100 et 102 de fixation au plateau inférieur 80. Dans les faces de fixation 100 et 102 on trouve des trous 104 et des encoches 106 pour coopérer avec des crochets déformables de clippage . La paroi supérieure 96 du capot 82 comporte deux trous de positionnement et de fixation 108 de l'ensemble de connexion La figure 9 comporte en outre un crochet déformable 130 qui fait saillie dans la cavité du capot 82.

En se référant maintenant aux figures 10 et 11 on va décrire le plateau inférieur 80 du corps du dispositif de lecture/écriture. La pièce 80 comprend une partie frontale 120 qui définit la paroi inférieure de la fente d'introduction 90, deux parties latérales 122 et 124 qui sont destinées à coopérer avec les faces d'assemblage 100 et 102 de la pièce 82 et une partie centrale plane 126 qui constitue la table du couloir de guidage. Pour permettre l'assemblage et le positionnement des pièces 80 et 82, le plateau inférieur 80 comprend 4 crochets de clippage déformables référencés 130 pour coopérer avec les encoches de clippage 106 du capot 82, et des pions 132 destinés à pénétrer dans les trous 104 du capot 82. En outre, le plateau inférieur 80 comprend deux tenons 134.

De plus, selon l'invention, le dispositif de lecture/écriture comporte plusieurs moyens de fixation sur la machine équipée de ce dispositif. Comme on le voit sur les figures 7 à 11, le capot 82 et le plateau inférieur 80 sont munis d'oreilles 140 et 142 qui, après assemblage des pièces 80 et 82, définissent deux trous de fixation 144 et 146 dont les axes sont parallèles au passage d'introduction. En outre, les parties latérales du capot 82 et de la table inférieure 80 sont munies de trous de fixation 148 et 150 qui ont des axes perpendiculaires au passage d'introduction. Le dispositif de lecture/écriture peut donc être fixé sur la machine de deux manières différentes.

L'assemblage et le montage du dispositif de lecture/écriture se fait de la manière suivante: L'ensemble de connection est mis en place dans la cavité du capot 82. Le crochet 150 pénètre dans un trou 152 ménagé dans le support isolant 62 du circuit électronique 60, et les pions pénètrent dans les trous de fixation 108 du capot 82. L'utilisation du dispositif de lecture/écriture découle clairement de la description précédente. La carte est insérée dans le fente d'introduction avec ses plages de contact électrique en avant. La carte est poussée dans le couloir d'introduction jusqu'à ce que le bord avant de la carte vienne en contact avec le micro-contact 52. Durant cette phase la carte est guidée par le plancher et les parois latérales du couloir d'introduction. Dans cette position, les portions courbes des lames de contact 42 sont en regard des plages de contact de la carte. La déformation élastique des lames assure une bonne liaison Electrique entre la carte et la machine de traitement. De plus, les extrémités 42c des lames élastiques conductrices 42 sont guidées latéralement puisqu'elles restent dans les encoches 44 ménagées dans les évidements.

Il découle de la description précédente que l'invention répond bien au problème posé.

Le connecteur 30 a une structure très simple et il peut être utilisé pour le traitement de cartes ayant des plages de contact correspondant à l'une ou l'autre des deux normes.

Le circuit électronique 60 peut être adopté au mode de traitement souhaité, et en particulier à l'exploitation des deux normes de cartes ou d'une seule de ces normes. Il suffit que le support mécanique isolant 62 soit standard et présente les mêmes trous de fixation et les mêmes orifices pour le passage des extrémités 42d des lames conductrices du connecteur.

De même le connecteur 30 associé au circuit électronique 60 pourrait être monté sur un corps de dispositif de lecture/écriture différent. On peut toutefois noter que le corps qui a été décrit en liaison avec les figures 7 à 11 présente de nombreux avantages. Il est très compact. Le circuit électronique est logé à l'intérieur du corps ; il est donc protégé. Il est d'un assemblage très aisé et il peut se monter de plusieurs manières dans la machine d'exploitation des cartes.

**Revendications**

1. Ensemble de connexion pour cartes à mémoire électronique du type comportant sur une de ses faces principales une pluralité de plages de contact électrique comprenant:

   un connecteur (30) comportant un support (32) présentant une première face (48) et une deuxième face (50), et une pluralité de conducteurs électriques (42) en forme de lames élastiquement déformables, chaque lame présentant une extrémité incurvée (42a) pour entrer en contact avec une plage de ladite carte et faisant saillie hors de ladite première face (48) et une deuxième extrémité (42d) faisant saillie hors de ladite deuxième face (50),

   un circuit électronique (60) comportant un support isolant (62) présentant une première face opposée à ladite deuxième face (50) du connecteur (30) et une deuxième face munie de liaisons électriques et de composants électroniques (64, 66) ) et des moyens de fixation (152) sur une pièce externe ; et

   des moyens pour positionner et pour fixer ledit connecteur (30) sur ledit support isolant (62), et des moyens pour établir une connexion électrique entre lesdites liaisons électriques du circuit électronique et lesdites deuxièmes extrémités (42d) desdites lames conductrices, caractérisé en ce que les lames sont solidaires dudit support (32) par leur partie médiane (42c) et la première face du circuit électronique est mise en contact avec ladite deuxième face du connecteur.

2. Ensemble de connexion selon la revendication 1, pour traiter deux types de cartes présentant une position particulière des plages de contact électrique caractérisé en ce que ledit connecteur (30) comporte au moins deux ensembles de lames conductrices (42), les lames de deux ensembles différents étant parallèles entre elles,et les deux lames correspondantes de deux ensembles associés étant alignées, en ce que ledit support (32) du connecteur (30) comporte deux évidements alignés selon la direction générale desdites lames,ladite extrémité incurvée de chaque lame pénètrant dans un desdits évidements.

3. Ensemble de connexion selon la revendication 2, caractérisé en ce que ledit support (32) du connecteur (30) est réalisé par moulage, une partie de la portion médiane (42c) de chaque lame étant surmoulée par le matériau formant ledit support durant le moulage.

4. Ensemble de connexion selon l'une quelconque des revendications 1 à 3, caractérisé en ce que ledit support isolant (62) est muni d'orifices pour laisser passer les deuxièmes extrémités (42d) des conducteurs électriques (42) en forme de lames, lorsque ledit connecteur (30) est fixé sur ledit circuit électronique.

5. Ensemble de connexion selon la revendication 4, caractérisé en ce que la connexion électrique et la fixation du circuit électronique (60) sur ledit connecteur (30) sont obtenues en soudant lesdites deuxièmes extrémités (42d) des conducteurs électriques (42) avec les liaisons électriques réalisées sur ledit support isolant.

6. Ensemble de connexion selon l'une quelconque des revendications 1 à 5, caractérisé en ce que ledit support (32) du connecteur comporte, faisant saillie hors de sa première face, une butée mécanique pour la carte à mémoire et un micro-contact apte à être actionné lorsque ladite carte arrive en appui sur ladite butée.

7. Dispositif de lecture/écriture pour cartes à mémoire électronique caractérisé en ce qu'il comprend:

   un ensemble de connexion (30) selon l'une quelconque des revendications 1 à 6 ;

   une première pièce (82) comportant une partie destinée à recevoir et à fixer le support isolant (62) dudit ensemble de connexion, une partie frontale pour définir le bord supérieur d'une fente d'introduction (90) pour lesdites cartes, et deux parties latérales (92, 94) pour définir les deux bords latéraux (86, 88) de ladite fente d'introduction et deux parois latérales d'un couloir d'introduction desdites cartes, chacune desdites parties latérales comportant de plus une face de fixation (100,102) ;

une deuxième pièce(80) comportant une partie frontale pour définir le bord inférieur de ladite fente d'introduction (90), deux parties latérales (122, 124) pour coopérer avec les faces de fixation de ladite première pièce (82), et une partie centrale plane (126) pour former le plancher dudit couloir d'introduction ; et

des moyens (106, 104) pour solidariser entre elles lesdites première et deuxième pièces (82,80) par leurs faces de fixation.

## Claims

1. Connection assembly for electronic memory boards of the type comprising a plurality of electrical contact areas on one of its principal faces, consisting of:

   a connector (30) comprising a support (32) having a first face (48) and a second face (50) and a plurality of electrical conductors (42) in the form of elastically deformable blades, each blade having a curved end (42a) for entering into contact with an area of the said board and projecting out of the said first face (48) and a second end (42d) projecting out of the said second face (50),

   an electronic circuit (60) comprising an insulating support (62) having a first face opposite the said second face (50) of the connector (30) and a second face provided with electrical connections and electronic components (64, 66), and means (152) for attachment to an external element; and

   means for positioning and attaching the said connector (30) to the said insulating support (62) and means for establishing an electrical connection between the said electrical links of the electronic circuit and the said second ends (42d) of the said conductive blades, characterised in that the blades are integral with the said support (32) by their central part (42c) and the first face of the electronic circuit is placed in contact with the said [lacuna].

2. Connection assembly according to Claim 1 for handling two types of boards having a particular position of the electrical contact areas, characterised in that, the said connector (30) comprises at least two assemblies of conductive blades (42), the blades of the two different assemblies being parallel to one another and the two corresponding blades of two associated assemblies being aligned, in that the said support (32) of the connector (30) comprises two recesses aligned in the general direction of the said blades, the said curved end of each blade penetrating one of said recesses.

3. Connection assembly according to Claim 2, characterised in that the said support (32) of the connector (30) is made by moulding, a part of the central portion (42c) of each blade being encapsulated by the material forming the said support during moulding.

4. Connection assembly according to any one of Claims 1 to 3, characterised in that the said insulating support (62) is provided with orifices for allowing the two ends (42d) of the electrical conductors (42) in the form of blades to pass when the said connector (30) is fixed to the said electronic circuit.

5. Connection assembly according to Claim 4, characterised in that the electrical connection and the attachment of the electronic circuit (60) to the said connector (30) are achieved by soldering the said two ends (42d) of the electrical conductors (42) to the electrical links made on the said insulating support.

6. Connection assembly according to any one of Claims 1 to 5, characterised in that the said support (32) of the connector comprises, projecting from its first face, a mechanical stop for the memory board and a microcontact suitable for being actuated when the said board comes to rest against the said stop.

7. Reading/writing device for electronic memory boards characterized in that it comprises:

   a connection assembly (30) according to any one of Claims 1 to 6;

   a first element (82) comprising a part intended for receiving and for attaching the insulating support (62) of the said connection assembly, a front part for defining the upper edge of an insertion gap (90) for the said boards, and two lateral parts (92, 94) for defining the two lateral edges (86, 88) of the said insertion gap and two lateral walls of an insertion passage for the said boards, each of the said lateral parts additionally comprising one attachment face (100, 102);

a second element (80) comprising a front part for defining the lower edge of the said insertion gap (90), two lateral parts (122, 124) for cooperating with the attachment faces of the said first element (82) and a central plane part (126) for forming the floor of the said insertion passage; and

means (106, 104) for integrating the said first and second elements (82, 80) by their attachment faces.

**Patentansprüche**

1. Verbindungseinrichtung für Karten mit elektronischem Speicher vom Typ, der auf einer seiner Hauptseiten eine Mehrzahl von elektrischen Kontaktbereichen aufweist, mit:

   einem Konnektor (30), der einen Träger (32) aufweist, der eine erste Seite (48) und eine zweite Seite (50) aufweist, und eine Mehrzahl von elektrischen Leitern (42) aufweist in Form von elastischen verbiegbaren Zungen, wobei jede Zunge ein gebogenes Ende (42a) aufweist, um in Berührung mit einem Bereich der Karte zu kommen und über die erste Seite (48) hinaus vorspringt, und ein zweites Ende (42d) aufweist, das über die zweite Seite (50) hervorsteht,

   einem elektronischen Schaltkreis (60), der einen isolierenden Träger (62) aufweist, der eine erste Hauptseite aufweist gegenüberliegend der zweiten Seite (50) des Konnektors (30) und eine zweite Seite aufweist, die mit elektrischen Verbindungen und elektronischen Bauteilen (64,66) versehen ist, und mit Befestigungseinrichtungen (152) auf einem Außenteil; und

   Einrichtungen zum Positionieren und zum Befestigen des Konnektors (30) auf dem isolierenden Träger (62), und mit Einrichtungen zum Bilden einer elektrischen Verbindung zwischen den elektrischen Verbindungen des elektronischen Schaltkreises und den zweiten Enden (42d) der leitenden Zungen, dadurch gekennzeichnet, daß die Zungen mit dem Träger (32) über ihren Mittenbereich (42c) verbunden sind und die erste Seite des elektronischen Schaltkreises mit der zweiten Seite des Konnektors in Brührung gebracht wird.

2. Verbindungseinrichtung nach Anspruch 1 zum Behandeln von zwei Arten von Karten, die eine bestimmte Stellung der elektrischen Kontaktbereiche aufweisen, dadurch gekennzeichnet, daß der Konnektor (30) wenigstens zwei Anordnungen von leitenden Zungen (42) aufweist, wobei die Zungen der beiden verschiedenen Anordnungen untereinander parallel sind, und die beiden entsprechenden Zungen der beiden zugeordneten Anordnungen ausgerichtet sind, daß der Träger (32) des Konnektors (30) zwei gemäß der allgemeinen Richtung der Zungen ausgerichtete Ausnehmungen aufweist, wobei das gebogene Ende einer jeden Zunge in eine der Ausnehmungen hineinragt.

3. Verbindungseinrichtung nach Anspruch 2, dadurch gekennzeichnet, daß der Träger (32) des Konnektors (30) durch Formen erzeugt wird, wobei ein Bereich des Mittenabschnitts (42c) einer jeden Zunge ausgegossen wird durch das Material, das den Träger bildet, während des Formens.

4. Verbindungseinrichtung nach einem der Ansprüche 1 bis 3, dadurch gekennzeichnet, daß der isolierende Träger (62) mit Öffnungen versehen ist, um die zweiten Enden (42d) der elektrischen Leiter (42) in Form von Zungen hindurchzulassen, wenn der Konnektor (30) auf dem elektronischen Schaltkreis befestigt wird.

5. Verbindungseinrichtung nach Anspruch 4, dadurch gekennzeichnet, daß die elektrische Verbindung und die Befestigung des elektronischen Schaltkreises (60) auf dem Konnektor (30) erhalten werden durch Verschweißen der zweiten Enden (42d) der elektrischen Leiter (42) mit den elektrischen Verbindungen, die auf dem isolierenden Träger erzeugt werden.

6. Verbindungseinrichtung nach einem der Ansprüche 1 bis 5, dadurch gekennzeichnet, daß der Träger (32) des Konnektors einen über seine erste Seite vorspringenden mechanischen Anschlag für die Speicherkarte und einen Mikrokontakt aufweist, der geeignet ist, betätigt zu werden, wenn die Karte in Anlage an den Anschlag kommt.

7. Vorrichtung zum Lesen/Schreiben von elektronischen Speicherkarten, dadurch gekennzeichnet, daß sie aufweist:

   eine Verbindungsanordnung (30) nach einem der Ansprüche 1 bis 6;

   ein erstes Teil (82), das einen Bereich aufweist, der dazu dient, den isolierenden Träger (62) der Verbindungseinheit aufzunehmen und zu befestigen, einen vorderen Bereich aufweist, um den oberen Rand eines Einführspaltes (90) für die genannten Karten zu definieren, und zwei Seitenbreiche (92,94) aufweist, um die beiden seitlichen Ränder (86,88) des Einführspaltes und zwei seitliche Wände eines Einführkanals dieser Karten zu definieren, wobei jede der seitlichen Bereiche weiterhin eine Befestigungsseite (100,102) aufweist;

ein zweites Teil (80), das einen vorderen Bereich zum Definieren des unteren Randes des Einführspaltes (90), zwei Seitenbereiche (122,124) zum Zusammenwirken mit den Befestigungsseiten des ersten Teils (82) und einen ebenen Mittenbereich (126) aufweist, um den Boden des Einführkanals zu bilden; und

Einrichtungen (106,104), um die ersten und zweiten Teile (82,80) über ihre Befestigungsseiten miteinander zu verbinden.

FIG.1

FIG.2

FIG.3

FIG.4

FIG.5a

FIG.5b

FIG.6

FIG.8

FIG.7

FIG.9

## FIG. 10

## FIG. 11